# EUROPEAN PATENT APPLICATION

(11) **EP 1 571 044 A2**
(43) Date of publication of application: **07.09.2005**
(21) Application number: 05101613.7
(22) Date of filing: 02.03.2005
(51) Int. Cl.: B60R 7/06

(54) **A motor-vehicle dashboard with a glove compartment of variable configuration**

(30) Priority: 03.03.2004 IT TO20040136
(71) Applicant: FIAT AUTO S.p.A., 10135 Torino (IT)
(72) Inventor: Wainberg, Ruben, 10135 Torino (IT); Bianco, Guido, 10135 Torino (IT)
(74) Representative: Quinterno, Giuseppe

(57) **Abstract**

A glove compartment (4) formed in the dashboard (1) can be switched between (at least) one first and (at least) one second operative configuration in which its external dimension in the longitudinal direction and its storage capacity are larger and smaller, respectively.

## Description

The present invention relates in general to motor vehicles and its subject, in particular, is a dashboard in which a compartment, conventionally known as a "glove compartment" and usable for the storage of objects, is formed in the region disposed in front of the seat which is provided for a passenger.

Typically, the glove compartment is formed in a portion of the dashboard which projects towards the passenger and which, particularly in small motor vehicles, extends towards the passenger's knees.

An object of the present invention is to provide a dashboard of the type defined above which improves the comfort of the passenger compartment, specifically for the passenger who is seated in front of the glove compartment.

This and other objects are achieved, according to the invention, by a dashboard of the type defined above, characterized in that the glove compartment can be switched between (at least) one first and (at least) one second operative configuration in which its external dimension in the longitudinal direction of the motor vehicle is larger and smaller, respectively.

In a dashboard according to the present invention, the glove compartment thus has a variable configuration; as will become clearer from the following description, it can adopt a first operative configuration in which it has a maximum storage capacity and a second operative configuration in which it has a reduced storage capacity but, in compensation, owing to the reduction in the longitudinal dimension, the conditions of comfort for the passenger are distinctly improved.

In the second configuration, the space "gained" in front of the front passenger's knees can also be utilized partially for the benefit of the corresponding rear passenger, by moving the front passenger's seat partially forwards.

Further characteristics and advantages of the invention will become clear form the following detailed description which is given purely by way of non-limiting example with reference to the appended drawings, in which:
Figure 1 is a partially-sectioned, partial perspective view of a motor-vehicle dashboard according to the present invention,
Figure 2 is a partial perspective view similar to that shown in Figure 1, in which a movable closure door of the glove compartment is shown in a raised condition,
Figure 3 is a partial perspective view similar to that shown in Figure 2 and shows a front wall of the glove compartment arranged in a forward position corresponding to a most compact configuration, and
Figure 4 is a partial perspective view similar to those shown in the previous drawings and shows the glove compartment as it appears in the operative configuration of use with reduced longitudinal dimension and storage capacity.

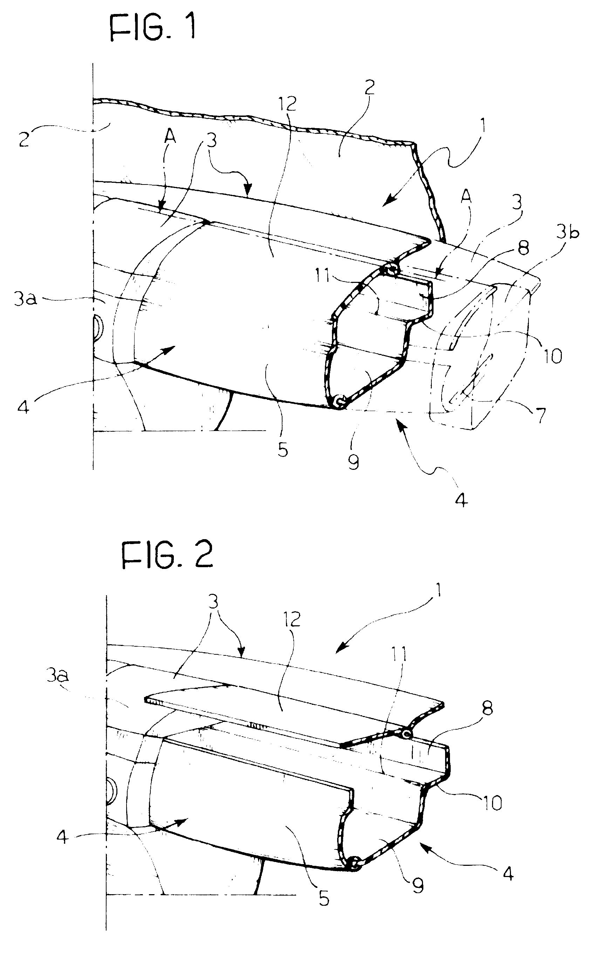

A motor-vehicle dashboard 1 is shown partially in Figure 1 of the appended drawings.

The dashboard 1 extends in the vicinity of the base of a windscreen 2 and comprises, in a manner known *per se,* a stationary structure, indicated 3. In the portion of the dashboard which is located in front of the front seat (not shown) which is provided for the front passenger, there is a glove compartment, generally indicated 4.

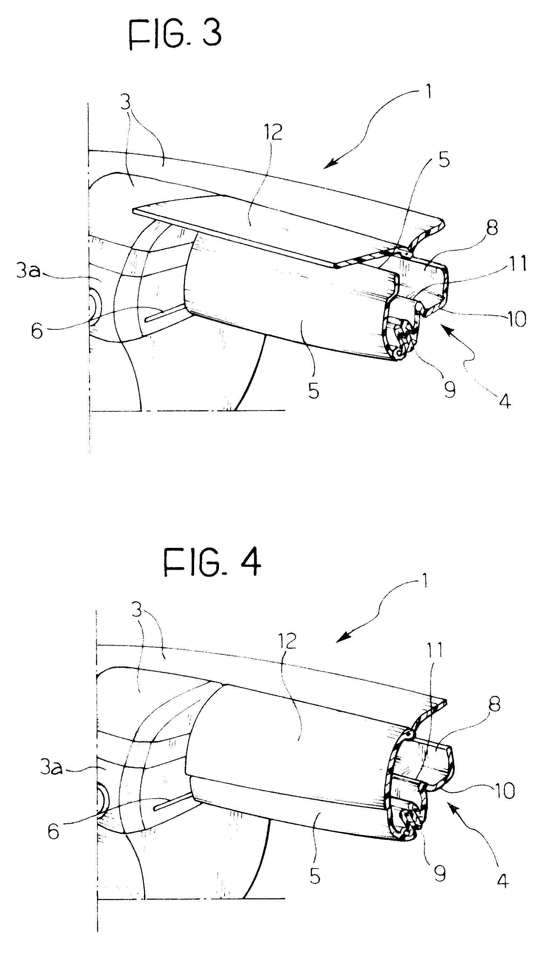

In the embodiment shown by way of example, the glove compartment 4 is delimited at the front by a front wall 5 which can be moved in a direction substantially corresponding to the longitudinal direction of the motor vehicle, along substantially horizontal guides 6 and 7 shown in Figures 1, 3 and 4. In the embodiment shown, (at least) one guide 6 is formed on a side of a central projecting body 3a of the dashboard (Figures 3 and 4) and (at least) one guide 7 is formed in a stationary end body 3b of the dashboard (Figure 1).

The way in which the front wall 5 of the glove compartment 4 is coupled with the respective guides 6 and 7 may correspond to one of the many solutions that are known *per se* and will not therefore be described further.

Moreover, snap-coupling means may be provided between the projecting stationary bodies 3a and 3b of the dashboard and the movable front wall 5 of the glove compartment 4 for stabilizing the front wall 5 in at least one pulled-back position such as that shown in Figure 1 and in at least one forward position such as that shown in Figures 3 and 4.

The front wall 5 may also be provided with openings or release devices known *per se,* for example, with handles or push-buttons, for releasing the front wall from the associated retaining means that stabilize its arrangement in one of the above-mentioned operative positions.
The glove compartment 4 is also delimited by a stationary end wall 8 substantially facing the movable front wall 5. The wall 8 is fixed firmly to the stationary structure 3 of the dashboard.

In the embodiment shown by way of example, the glove compartment 4 is delimited at the bottom by a first, movable base wall 9 and by a second, fixed base wall 10 adjacent the first base wall.

The walls 9 and 10 are disposed towards the rear portion and towards the front portion of the motor vehicle, respectively, in use.

In the embodiment shown, the wall 10 is raised relative to the wall 9, but this arrangement is not compulsory.

In the embodiment shown, the base wall 9 is flexible and can be folded, for example, like an accordion, as can be seen from a comparison of Figures 2 and 3, as a result of the movement of the front wall 5 from the pulled-back position in which it is relatively close to the passenger's seat to the forward position in which it is relatively far from that seat.

Alternatively, the base wall 9 may be resiliently extensible, or may comprise a plurality of longitudinal wall portions that are slidable relative to one another, so that the wall 9 as a whole can be lengthened or shortened substantially telescopically.

According to a further alternative, the lower wall 9 of the glove compartment 4 may be able to slide away from and towards a corresponding receptacle formed in the vicinity of or in the stationary structure 3 of the dashboard.
In the embodiment shown, the base walls 9 and 10 are separated from one another by an upwardly-extending transverse separating rib 11.

The glove compartment 4 is delimited at the top by a closure element 12 in the form of a door which is articulated, in the region of its side that is directed towards the front portion of the vehicle, to the stationary structure 3 of the dashboard, about a substantially horizontal axis indicated A-A in Figure 1. In particular, this axis is raised relative to the base walls 9 and 10 of the compartment 4.

However, the invention is not limited to a glove compartment provided with an upper closure door but also extends, for example, to embodiments in which the glove compartment is permanently open upwards and/or towards the front and does not have a closure door.

In the above-described dashboard according to the present invention, the glove compartment can be switched between (at least) one first and (at least) one second operative configuration such as those shown in Figures 1 and 4, respectively.

In the first operative configuration (Figure 1), the glove compartment 4 has a larger storage capacity and external dimension.

In the second operative configuration (Figure 4), the compartment 4 has a reduced external dimension and storage capacity.

Switching from the first operative configuration to the second takes place in accordance with the sequence of illustrations shown in Figures 1 to 4: starting from the configuration of Figure 1, the closure door 12 is raised (Figure 2) and the front wall 5 of the compartment 4 is then moved from the pulled-back position of Figure 2 to the forward position of Figure 3 and the closure door 12 is then released and pivots about the axis A-A so as to fit against the front wall 5 (Figure 4).

Switching from the second operative condition (Figure 4) to the first (Figure 1) takes place by performing the above-described sequence in reverse.

In the solution shown by way of example in the drawings, the stationary base wall 10 ensures a minimum storage capacity of the glove compartment even in the condition in which the compartment is arranged in the second or most compact configuration.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A motor-vehicle dashboard (1) in which a glove compartment (4) is formed,
the dashboard (1) being **characterized in that** the glove compartment (4) can be switched between (at least) one first and (at least) one second operative configuration in which its external dimension in the longitudinal direction and its storage capacity are larger and smaller, respectively.

2. A dashboard according to Claim 1 in which the glove compartment (4) comprises, at the front, a front wall (5) which can be moved along guide means (6, 7) in a direction substantially corresponding to the longitudinal direction of the motor vehicle between (at least) one pulled-back position and (at least) one forward position, in which it is relatively close to and far from a front seat of the motor vehicle which is provided for a passenger, respectively.

3. A dashboard according to Claim 2 in which the glove compartment (4) is delimited at the bottom by a (first), movable base wall (9).

4. A dashboard according to Claim 3 in which the (first) base wall (9) of the glove compartment (4) is flexible and can be folded, for example, like an accordion.

5. A dashboard according to Claim 3 in which the (first) base wall (9) of the glove compartment (4) is resiliently extensible.

6. A dashboard according to Claim 3 in which the (first) base wall (9) of the glove compartment (4) comprises a plurality of longitudinal wall portions so that it can be lengthened and shortened substantially telescopically.

7. A dashboard according to Claim 3 in which the (first) base wall (9) of the glove compartment (4) can slide away from and towards a corresponding receptacle formed in the vicinity of or in the stationary structure (3).

8. A dashboard according to any one of Claims 4 to 7 in which the glove compartment (4) is delimited at the bottom by a second base wall (10) adjacent the first base wall (9).

9. A dashboard according to Claim 8 in which the first and second base walls (9, 10) are disposed operatively towards the rear portion and towards the front portion of the motor vehicle, respectively.

10. A dashboard according to Claim 9 in which an upwardly-extending separating rib (11) is defined between the first and the second base walls (9, 10) of the glove compartment (4).

11. A dashboard according to any one of the preceding claims, comprising a movable closure element (12) which can close the glove compartment (4) both in the (at least one) first configuration and in the (at least one) second configuration.

12. A dashboard according to Claim 11 when dependent on Claim 2 in which the closure element (12) is a door (12) which is articulated to the stationary structure (3) about a substantially horizontal axis (A-A) and which, in the closure condition of the compartment (4), can be fitted against the front wall (5).

13. A dashboard according to Claim 12 in which the side of the door (12) which is directed towards the front portion of the motor-vehicle in the condition of use is articulated to the stationary structure (3) about a substantially horizontal axis (A-A) which is raised relative to the base wall (9, 10) of the glove compartment (4).
